# EUROPEAN PATENT APPLICATION

(11) **EP 4 266 624 A1**
(43) Date of publication of application: **25.10.2023**
(21) Application number: 22169378.1
(22) Date of filing: 22.04.2022
(51) Int. Cl.: H04L 9/32, H04N 1/00, G06T 1/00

(54) **DEVICES AND METHODS FOR DETECTION OF CURRENTNESS OF DATA**

(71) Applicant: Koninklijke Philips N.V., 5656 AG Eindhoven (NL)
(72) Inventor: TESSEL, Uli, Eindhoven (NL)
(74) Representative: Philips Intellectual Property & Standards

(57) **Abstract**

The present invention relates to a device (30, 30') for enabling detection of currentness of data and to a device (50, 50') for detection of currentness of data. The device for enabling detection of currentness of data is configured to obtain input data; generate entangled data by entangling the obtained input data with a continuously changing counter; generate a hash by applying a hash function on the obtained input data; combine the entangled data and the hash into output data; and output the output data for transport over a transport medium.

## Description

### FIELD OF THE INVENTION

The present invention relates to a first device for enabling detection of currentness of data, to a second device for detection of currentness of data, to a system comprising those devices, to corresponding methods and to a computer program for implementing said methods.

### BACKGROUND OF THE INVENTION

In multiple contexts data (e.g. physiological signals measured from a subject by as sensor) are transported over one or more transport media and there typically copied multiple times: The contents of a first copy are transported and another copy is created. Algorithms read the data and store their result (as copy of the result of the processing by the algorithm). At the end, the data may be converted into an image (e.g. an image illustrating the measured signals for display on a monitor). Hereby, the image is created, transported / copied and displayed at the end.

The situation when a computer or other electronic device freezes and stops responding is widely known. Such a freezing can be noticed at interaction with the device. However, by just "looking" at the device (e.g. a display screen), this situation can not necessarily be recognized. It is, however, be expected and assumed that any data that are present are "up to date"; currentness of data is, however, neither guaranteed nor detectable in an easy manner.

### SUMMARY OF THE INVENTION

It is an object of the present invention to provide a solution that enables (at a first device or method, such as a sender, source or creator of data) the detection of currentness of data and that performs (at a second device or method, such as a receiver, sink or processor of the data) the detection of currentness of data in order to improve the assurance that data are up to data so that it becomes easier to keep the confidence (i.e. the reliability of presentation of data).

In a first aspect of the present invention a device for enabling detection of currentness of data is presented, the device being configured to:
- obtain input data;
- generate entangled data by entangling the obtained input data with a continuously changing counter;
- generate a hash by applying a hash function on the obtained input data;
- combine the entangled data and the hash into output data; and
- output the output data for transport over a transport medium.

In a further aspect of the present invention a device for detection of currentness of data is presented, the device being configured to:
- obtain input data transported over a transport medium, the input data including entangled data and a hash;
- derive the entangled data and the hash from the obtained input data;
- generate untangled data by untangling the entangled data using a counter that has been used for entangling the data;
- generate a check hash by applying a hash function on the untangled data;
- compare the generated check hash with the derived hash; and
- determine currentness and validity of the generated untangled data based on the comparison of the generated check hash with the derived hash.

In a further aspect of the present invention a system is presented comprising:
- a first device for enabling detection of currentness of data as disclosed herein; and
- a second device for detection of currentness of data as disclosed herein.

In yet further aspects of the present invention, there are provided corresponding methods, a computer program which comprises program code means for causing a computer to perform the steps of the methods disclosed herein when said computer program is carried out on a computer as well as a non-transitory computer-readable recording medium that stores therein a computer program product, which, when executed by a processor, causes the methods disclosed herein to be performed.

Preferred embodiments of the invention are defined in the dependent claims. It shall be understood that the claimed methods, system, computer program and medium have similar and/or identical preferred embodiments as the claimed devices, in particular as defined in the dependent claims and as disclosed herein.

The present invention is based on the idea to commonly use two different mechanisms:
i) The data that is to be transported ("the input data") is entangled with a continuously changing counter, e.g. the current (real) time or a time-related counter.
ii) The entangled data is combined with a check value ("the hash").
The combined data is then outputted and transported over a transport medium, such as a wired or wireless connection. Since the counter (e.g. the time) continuously changes, the common result "entangled data" and "hash" will change as well.

The transported data are then used by first releasing them from entanglement by use of the counter that has been used for entanglement. If the transported data are "old" or delayed, they have been entangled (before transmission) with another counter value and are thus not usable. That the data are not correct is checked with the hash. Hence, it can be verified if the transported data is valid and usable, e.g. if the transported data are up to date and not delayed or copied (old) data.

For instance, in case of a physiological signal measured by a sensor from a subject it can be ensured that measured data that arrive e.g. at a patient monitor or computer and that are presented there to a caregiver or physician are up to date and correspond to the originally measured data, i.e. they are not delayed or are "old data frozen on the display".

In the context of the present disclosure, "entangling" shall generally be understood broadly a modifying, interleaving, scrambling or otherwise changing the input data by use of the continuously changing counter. The input data are thus "corrupted" by the counter, i.e., the counter is not simply carried along with the input data, so that the entangled data are, as such, not carrying useful data any longer. Only the "detangling" of the entangled data by use of the same counter reveals the original input data.

"Counter" shall be understood broadly in the sense of any value or parameter or figure that is predictable, i.e., it shall be understood as a predictable changing value/parameter/figure that is continuously or regularly or irregularly changing. A pseudo-random value may hence be regarded as a counter as well.

In a preferred embodiment the device is configured to generate the entangled data by entangling the obtained input data by applying an exclusive OR operation on bits or values of the obtained input data and the continuously changing counter or by scrambling the obtained input data and the continuously changing counter. Thus, the entangling (and the corresponding detangling) operation can be rather simple, e.g. by using a binary XOR of the values of the input data in digital form. For instance, in an embodiment the order of the bits of the obtained input data can be scrambled, wherein the counter may be used to determine the order. More generally, a mathematical function may be applied that is reversible and that gets two pieces of information, i.e. the obtained input data and the counter. The amount of information (e.g. bits) can become larger. In this context, "reversible" means that the function can be reversed by use of the counter.

Preferably, the device is configured to generate the entangled data by entangling the obtained input data with the current time or a periodically changing value as continuously changing counter. Generally, any kind of counter can be used, as long as it is continuously (e.g. a regular or irregular intervals, at predetermined times, etc.) changing and known (e.g. set or agreed in advance, predetermined in a standard, communicated to the second device from the first device or another entity, etc.) to the devices so that they use the same counter. As mentioned, the counter does not need to count regularly, i.e. in the sense of changing at "equal time intervals". In other embodiments, the counting of an event may be used, wherein an "event" may e.g. be to receive the input data, i.e. that something has been sent. Both sides typically know that as well. Further, in an embodiment any value, such as a real random number, may be used, but then this value needs to be transported, so that the data can be used. If not both sides know the counter (e.g. if an incorrect counter or an outdated counter value is used by the receiving side), this can be recognized according to the present invention as well,

The hash can generally be an arbitrary check value, hash function, a checksum, or parity. The kind of hash mainly determines the probability that is desired for detecting potential problems with respect to currentness of data.

In an embodiment the device is configured to generate the hash by applying a hash function on the obtained input data and the continuously changing counter. The hash is determined by both the obtained input data and the counter, i.e. the actual information and the counter value, as if the counter was part of the actual information. A simple hash function is e.g. a parity bit, i.e. an information whether the number of set bits in the information is even, here the bits in the input data and in the counter. The hash thus preferably includes the original data and the counter so that the hash value changes (due to the changes to the counter). Otherwise, there might be an indication that the data has not changed at all, which could easily be misused.

In the context of the present disclosure, to "combine the entangled data and the hash" shall generally be understood as any kind of combination as long as it is ensured that the two pieces of information can be brought together at the receiving end where they are accessed. A simple form of combination is to place one after the other. Another option is to transport entangled data and the hash in separate channels, for example in two messages.

In an embodiment the device iszx configured to output the hash with a lower data rate than the entangled data. This avoids an increase of the total data rate for outputting the data by the additional output of the hash in addition to the entangled data. In this case it is preferred that the hash is then generated from more input data to ensure that all input data are not only entangled but are "hashed" as well.

In an implementation the input data are obtained from a sensor configured to acquire measurement data from a subject. For instance, any kind of physiological data or vital sign (such as heart rate, SpO2, respiration rate, ECG signals, temperature, blood pressure, etc.) may be measured and transported to e.g. a patient monitor for processing and display. In such a scenario it is of utmost importance for patient's safety reasons that the data that are processed and displayed are up to date and not any old or (unintentionally) delayed data.

At the second device, e.g. a patient monitor in the scenario described above, currentness and validity of the generated untangled data is determined based on the comparison of the generated check hash with the derived hash. In particular, if the generated check hash is identical to the derived hash it is determined that the generated untangled data are current and valid, i.e. not unintentionally delayed or frozen.

In a system according to the present invention, in addition to the two devices explained above, a third device and a fourth device may be present, for instance to further process that data output by the second device. The third device is configured to generate a source image from the data (that have been checked for currentness by the second device) and to generate a secured image based on the source image by generating at least one secured image part, wherein the secured image part is generated by combining a source image part of the source image with a corresponding secure pattern. The fourth device is configured to display the secured image, to detect the security pattern from the secured image and to check the currentness of the detected security pattern. This provides for a reliable operating of displaying image data, by use of which it is ensured that current image data is displayed, i.e. that the displaying is done correctly.

This embodiment is based on the idea that additional information is added to image to be displayed, wherein the additional information may be invisible or nearly invisible when the image comprising the additional information is displayed, and that the additional information is used for monitoring the currentness of the displayed image, which, particularly, displayed contents of which may change over the time. The monitoring may be an independent process or part and is used to check integrity of changing image data, which may be critical. The additional information, particularly, the content of the additional information may be independent from the image, particularly, from the content visualized by the image. The additional information incorporated in the image may be changed over the time. Monitoring the displaying of the image may be done by checking the additional information with regard to additional information expected to be present in the displayed image. If the additional information has been changed or updated over the time, the expected additional information has to correspond to the last changed or updated additional information for approving a correct operating the displaying of the image. Further, the present invention may allow integrating changed image parts, which are retrieved or derived by other image sources, into the image to be displayed, wherein the other image sources are not the original image source of the image combined with additional information and may provide image data, which lacks, i.e. does not comprise additional information.

This embodiment is also called "screen freeze detection", as disclosed in WO 2013/035015 A1. In this document, which is herein incorporated by reference, further embodiments are described that may be applied in the context of the present invention as well.

In a further embodiment one or more watchdogs may be used. When a system sees valid data, it can silence a watchdog. If the watchdog strikes, it can be deduced that the function is not processing valid data because it does not work at all or one channel does not transport the data. This option is better than just using a simple check whether a code is running, but it depends on the particular implementation whether it is applicable.

The system may be a patient monitoring system and at least the fourth device may be included or representing a patient monitor. Further, the first device may include or represent a data processor, and the second and third devices may include or represent an image generator.

In a particular implementation the system is configured to generate and display a stream of images comprising areas showing alarms or critical vital signs of a patient, wherein the images may change over time, and wherein the system comprises:
- a secured image generator configured to generate a stream of secured images based on a stream of source images comprising areas showing alarms or critical vital signs of a patient, by generating at least one secured image part in the source images, wherein the secured image part is generated by combining a part of the source image with a security pattern generated by the secured image generator, wherein said security pattern is updated with time;
- a memory storage to store the secured images; and
- an observer storage configured to detect the security pattern from the secured image and to check the currentness of the detected security pattern by comparing the detected security pattern with an expected current security pattern.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of a typical conventional implementation of a system for the transport and processing of measured data.
Fig. 2 shows a schematic diagram of an embodiment of a device for enabling detection of currentness of data according to the present invention.
Fig. 3 shows a flowchart illustrating an embodiment of a corresponding method performed by the device shown in Fig. 2.
Fig. 4 shows a schematic diagram of an embodiment of a device for detection of currentness of data according to the present invention.
Fig. 5 shows a flowchart illustrating an embodiment of a corresponding method performed by the device shown in Fig. 4.
Fig. 6 shows a schematic diagram of an embodiment of further optional devices in a system according to the present invention.
Fig. 7 shows a schematic diagram of an embodiment of a device for detection of currentness of data with additional watchdog according to the present invention.
Fig. 8 shows a schematic diagram of a system executing or supporting the monitoring of displaying image data according to an embodiment of the present invention.

### DETAILED DESCRIPTION OF EMBODIMENTS

A purpose of a display, e.g. a patient monitor, is to show critical data undistorted, without obscuring and in a timely manner. I.e., it is critical that certain parts of an image, e.g. areas showing alarms or critical vital signs, which may change over the time, are fully visible and updated regularly, i.e. are current and valid. Aspects of the present invention aim at ensuring, in certain applications, an effective, fast and safe operating of displaying of image data, which comprise information being relevant to safety, which may change over the time and/or displaying of which has to be up to date (i.e., if changes of at least one part of the image have occurred, these changes have to be visualized, displayed immediately).

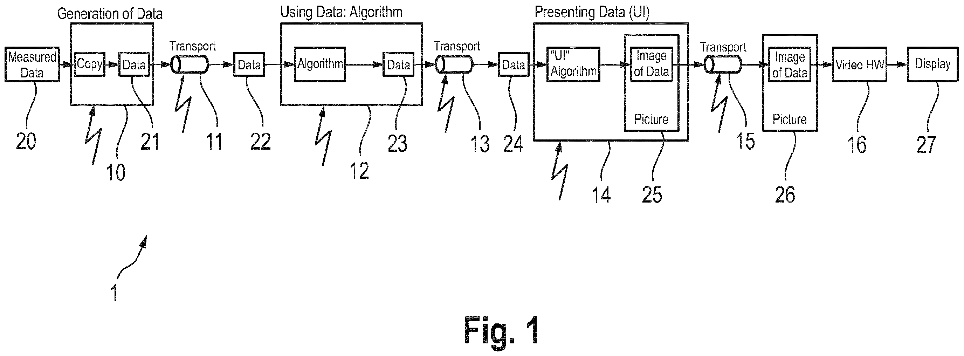

Fig. 1 shows a schematic diagram of a typical conventional implementation of a system for the transport and processing of measured data. The system 1 comprises a generation unit 10 that obtains (e.g. receives or retrieves) data 20, e.g. measurement data of a sensor (e.g. a vital signs sensor such as a heart rate sensor or an ECG sensor), which is typically copied into a data copy 21. The data copy 21 is transported via a first transport way 11. The transported data copy 22 is provided to a processing unit 12 that may e.g. apply an algorithm to generate processed data 23. The processed data 23 is transported via a second transport way 13. The transported processed data 24 is provided to a presentation unit 14 that applies e.g. a user interface (UI) algorithm to generate an image of the data, such as a picture data 25 for presentation. These picture data 25 are transported via a third transport way 15. The transported picture 26 is provided to video hardware (HW) 16 for converting the received picture data into video signal for presentation as an image 27, e.g. on a screen of a computer or a patient monitor. Thus, in effect, the original data 20 is multiple times transported / copied and processed before the final information is presented to a user, in this example as an image on a screen.

In everyday life, situations where an electronic device, e.g. a computer or tablet, freezes and stops responding are generally known. This can usually be quickly noticed by user when the user interacts with the device. However, without interaction, and by just looking at the device (i.e., at the screen of the device) such a situation cannot easily be detected. Nevertheless, it is expected that the data presented on the screen is "up to date", i.e. the presented data represented current data (rather than old, invalid or expired data).

The present invention aims at improving the "assurance" (i.e. a guarantee with high probability) that data provided to a user, e.g. presented on a screen (such as the image 27 in the system 1 shown in Fig. 1), are in fact current data so that it becomes easier to keep the confidence (reliability of presentation of data). This also applies to the case where standard components are used for processing and transport, where this assurance cannot (or can hardly) be achieved by checking the implementation.

Looking closer at the exemplary implementation of the system 1, several different problems (indicated by flashes in Fig. 1) may appear there.

A first potential problem is related to the transport way 15 and the presentation of the final data. Standard mechanisms are generally used when displaying the image 27, which are not necessarily safe. For instance, the copy operation / the transport may fail. For example, the image may be drawn into a texture that is still being drawn by a 3D system. If the 3D system fails / crashes, it can be continued to draw into the texture, but nothing will appear. As another example, the image may be written to one memory but read from another memory (e.g. a previous version, for example by double buffering and triple buffering).

A second potential problem is related to the presentation unit 14. The drawing process itself may be executed. If nothing is drawn at all, e.g. if the drawing process fails, the result is also shown frozen.

A third potential problem is related to the first and second transport ways 11 and 13. The data itself is repeatedly read on its way from memories into which the information was written. Here the problem can occur that the data is read from the wrong memory or the transport into this memory was disturbed (e.g. it does not take place at all, or even an old transport is repeated instead of being executed again).

A fourth potential problem is related to the generation unit 10 and the processing unit 12. The data is generated at some point, either by being measured, or by being modified, merged, or converted by an algorithm. These processes can fail so that no new data are output at all.

To address (and overcome) the first and second problems a solution as disclosed in WO 2013/035015 A1 (also called "screen freeze detection") may be applied. It relies on the fact that the transport of the data up to the "drawing" has worked, and checks (only) that the drawing process takes place and the result of it also arrives in the final memory.

The third and fourth problems arise in particular when standard solutions, such as database systems, are used. The problem with the wrong memory may be solved by the type of data and can immediately recognized as obviously wrong. For instance, a heart rate with the value "2147483648" can be easily recognized as "something is wrong here". But if there are many data in the memory, which are also similar, this is no longer typically the case. Such systems often do not have their own watchdog mechanism. They do not independently guarantee whether they are running or not. Since they can often be very complex, it is not practical or completely impossible to check the validity and currentness of the data as well as their generation and transport. In addition, it is a common optimization to look at the content when copying. If copied content is identical to the old content, it generally appears that nothing has to be done. However, older data may be used longer than intended and may thus no longer reflect the correct current data. Further, caching strategies meant to handle volumes of data are simply a potential source of error for these situations. Optimizing onto "data rarely changes" is counterproductive here, but sometimes simply exists.

Aspects of the present invention thus seeks to narrow down the third and fourth problems and to get an end to end solution that enables the detection of the currentness of data despite one or more of the potential problems illustrated above may appear.

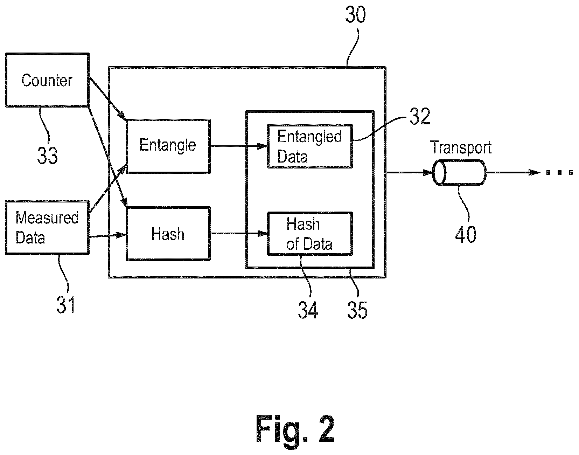

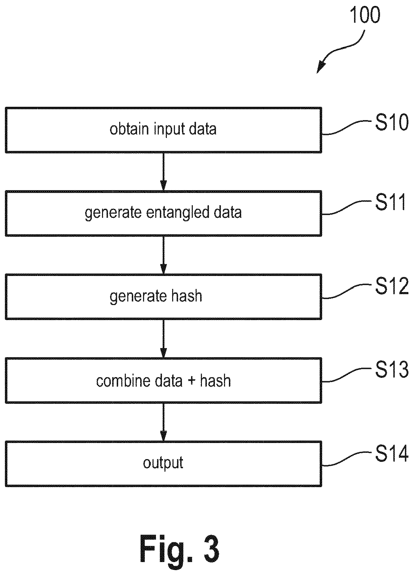

Fig. 2 shows a schematic diagram of an embodiment of a device 30 for enabling detection of currentness of data according to the present invention. Fig. 3 shows a flowchart illustrating an embodiment of a corresponding method 100 performed by the device 30.

The device 30 (herein also called first device) obtains (received or receives) input data 31 (step S10), such as measurement data of a sensor. Subsequently (step S11), it generates entangled data 32 by entangling the obtained input data 31 with a continuously changing counter 33, such as the current time or another time counter. Further (step S12), it generates a hash 34 by applying a hash function on the obtained input data, e.g. by applying a parity function that generates parities from the obtained input data. The entangled data 32 and the hash 34 are combined into output data 35 that are outputted for transport over a transport medium 40. Hereby, in an embodiment saving data rate, the hash may be outputted with a lower data rate than the entangled data. It shall be noted that steps S11 and S12, although they are shown in a consecutive order in Fig. 3, they may be carried out parallel or in a different consecutive order (i.e., step 11 may be carried out after step S12).

The device 30 may represent, in the system 1 shown in Fig. 1, the generation unit 10 and/or the processing unit 12. It can be implemented as processor or computer, as hard- and/or software. For instance, in an embodiment it may be implemented as a programmed processor. The method 100 may e.g. be implemented as computer program running on a computer or processor. The input data 31 may be obtained directly from the sensor or from a buffer or memory through a wireless or wired transmission, e.g. via a measurement cable or a Bluetooth connection. The transport medium 40 may be a wireless or wired transmission medium as well.

According to an embodiment of the present invention known mechanisms may be used for data transport (e.g. with a database system) and data entangling, e.g. by interleaving the input data with the current time (as counter) and supplemented with a check value (as hash). The entangling (e.g. interleaving) of the input data with time may be rather simple, e.g. by use of a binary XOR of the values of the input data in digital form.

The check value may be an arbitrary hash function, a checksum, or just a parity bit. Generally, it depends on what probabilities shall be used to detect problems. The hash function includes the original data and may optionally include the counter (e.g. the current time) as well. Since the counter (e.g. the time) always changes, the common result, i.e. the entangled data and the hash, will change as well, so that typically "no change optimizations" in the transport are already leveraged.

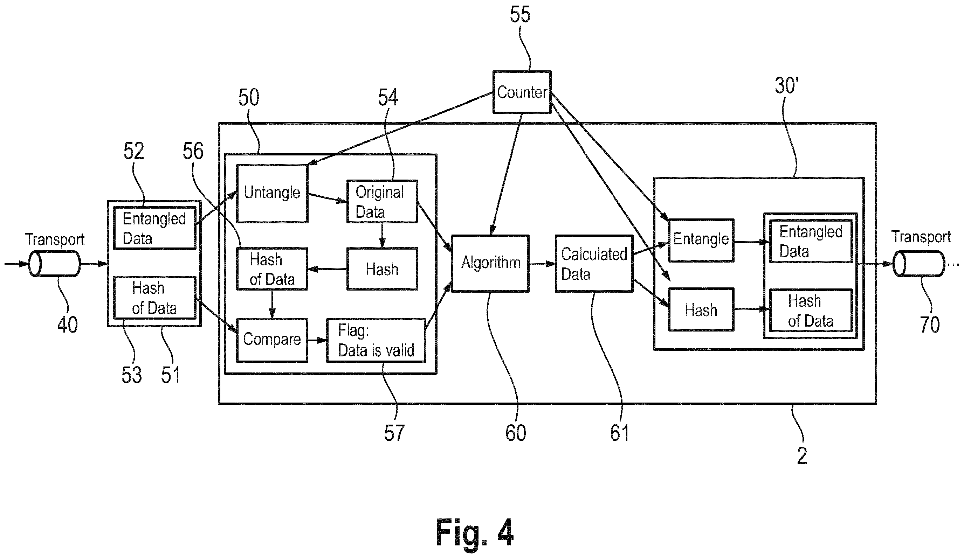

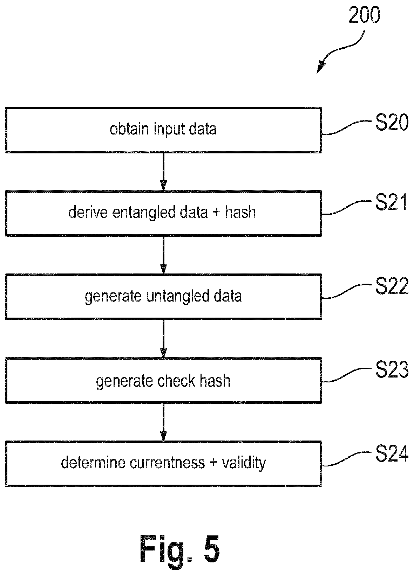

Fig. 4 shows a schematic diagram of an embodiment of a device 50 for detection of currentness of data according to the present invention. Fig. 5 shows a flowchart illustrating an embodiment of a corresponding method 200 performed by the device 50.

The device 50 (herein also called second device) obtains (step S20) input data 51 transported over the transport medium 40 (or another transport medium). The input data 51 include entangled data 52 and a hash 53, i.e. the input data 51 should correspond to the output data 35, but have been transported over the transport medium, which may have caused some problems. Further problems may have been caused by the output of the output data 35 by the device 30 and the reception of the input data 51 by the device 50. Subsequently (step S21), the entangled data 52 and the hash 53 are derived from the obtained input data 51. Untangled data 54 are generated (step S22) by untangling the entangled data 52 using a counter 55 that has been used for entangling the data (by the device 30), e.g. by using the current time or a time counter. A check hash 56 is generated by applying a hash function on the untangled data 54 (step S23), which is then compared with the derived hash 53. Based on the comparison of the generated check hash 56 with the derived hash 53 currentness and validity of the generated untangled data 54 is then determined (step S24), i.e., it is determined if the generated untangled data 54 are current data (rather than old / expired data) and if the generated untangled data 54 are valid (i.e., have not been manipulated or corrupted in any way). For instance, a flag 57 indicating if the untangled data is valid may be generated.

Thus, in order for the data to be used, it must first be released from entanglement. The counter (e.g. the time) is necessary for this purpose. Without it, the data is not usable, and thus the problem of delays, etc., is shown. If the data are "old", they are entangled (e.g. interleaved) with a different counter value (e.g. a different time value) and thus not usable. The hash value is used to check if the data is correct or not so that finally a "data is valid and usable" information may be provided as output by the device 50, e.g. to an algorithm for further processing of the untangled data or a transport medium for further transport.

The newly created data 61, i.e. the output of the algorithm 60 may then be repackaged in the same way as illustrated in Figs. 2 and 3 by another device 30' that may be configured in the same or similar way as the device 30. It may be entangled with a counter, complemented with a hash and then outputted to another transport medium 70.

The devices 50 and 30' and the method 200 (as well as the method performed by the device 30') may generally be implemented in the same or similar manner as the device 30 and the method 100, e.g. by software and/or hardware, e.g. as programmed processor. The devices 50 and 30' as well as the (optional) algorithm 60 (e.g. running on a processor) may be represent a system 2 that may be implemented as a common device (e.g. a common processor or computer. Referring to Fig. 1, the system 2 may e.g. represent the processing unit 12 and/or the presentation unit 14.

It shall be noted that the counter (55 in Fig. 4) that is provided to the different units in this embodiment may always be the same counter in an embodiment. In other embodiments different counters may be used, in particular the counter used by device 30' may be different from the counter used by device 50. If there is more than one source for the algorithm 60, it is preferred that different counters are used since each source of an algorithm may use its own counter.

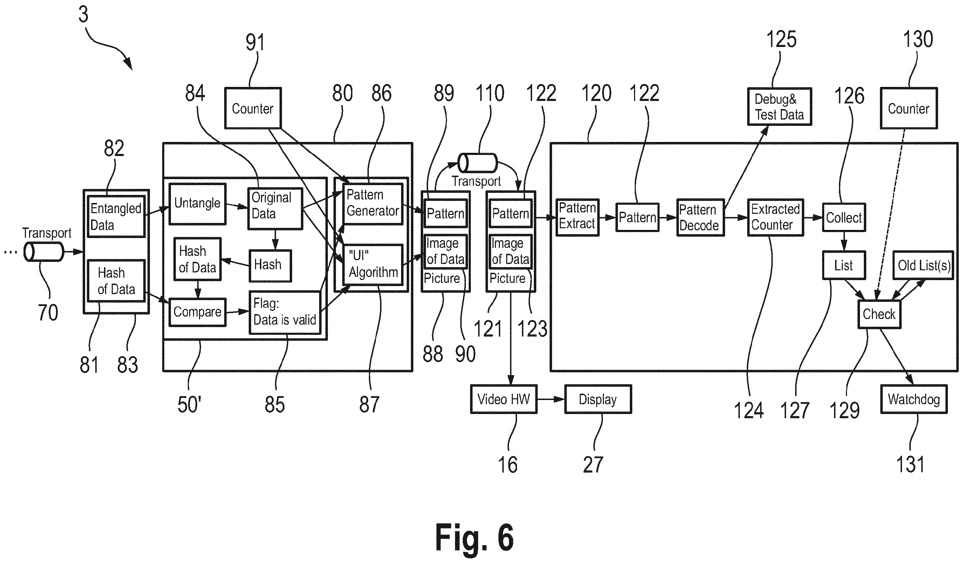

Fig. 6 shows a schematic diagram of further optional components of a system 3 according to the present invention. These components may include a third device 80 and a fourth device 120. The third device 80 may be coupled to the system 2 and receive data that are transported via the transport medium 70.

The third device 80 is configured to generate a source image from the data and to generate a secured image based on the source image by generating at least one secured image part, wherein the secured image part is generated by combining a source image part of the source image with a corresponding secure pattern. In more detail, the third device 80 comprises a device 50' for detection of currentness of data according to the present invention, that is identical or similar to the device 50 shown in Fig. 4. It processes the obtained input data 83 (including entangled data 81 and a hash 82) to generate untangled data 84 and a validity flag 85. These data 84 and 85 and the counter 91 (which is generally a different counter than the counter 33 or 55 shown in Figs. 2 and 4) are provided to a pattern generator 86 and a UI algorithm 87 for generating a picture 88 (the secured image) including a secure pattern 89 (e.g. a digital watermark or other hidden information) and an image 90 representing the untangled data (e.g. a graph or number showing the currently measured sensor value, e.g. the current heart rate or SpO2 value).

Thus, the input data is released from the entanglement and checked. Subsequently, the data is converted into an image. The image contains a secure pattern part and the actual, data-showing image. Hereby, for at least a part of the source image (or the complete source image) that is generated from the untangled data 84 a secured image part is generated, wherein the secured image part is generated by combining a source image part of the source image with a corresponding secure pattern. Further details and embodiments how the secured image is generated, which may be applied by the third device 80, can be found in WO 2013/035015 A1.

The fourth device 120 is configured to display the secured image, to detect the security pattern from the secured image and to check the currentness of the detected security pattern. This device 110 may be implemented in a way as disclosed in WO 2013/035015 A1 as well. The picture 88 generated by the third device 80 may be transported over a transport medium 110 to the fourth device 120 that obtains the transported picture 121 including the secure pattern 122 and the image 123. In parallel the transported picture is provided to video hardware 16 (as shown in Fig. 1 already) for converting the transported picture into video signal for presentation as an image 27, e.g. on a screen of a computer or a patient monitor.

In the fourth device 120 the secure pattern 122 is extracted and decoded to obtain the value of the counter 124 (that corresponds to the counter 91 used by the third device 80). The pattern 122 can be regarded an "image for algorithms". A very well-known example of such an "image" would be a QR code. It is information encoded as an image, which can easily be discovered by an algorithm in the overall image. The pattern may be hidden in the image (e.g. by steganography), and needs to be extracted from the common picture 121. The pattern 122 thus contains the information entered by the pattern generator 86, i.e. at least the counter value (of the original counter 91) or information generated from it, which changes (i.e. the extracted counter value 124).

The picture 121 may also represent a collection of many sources (i.e. many devices 80). In such an embodiment the fourth device 120 will also find many patterns 122 and extract many counters 124. The collection unit 126 can collect these values and create a list 127. This list must change over time: No counter may remain too long in the list 127. A check unit 129 checks this, e.g. by comparing the current list with at least one older list. A watchdog 131 may be used to monitor that these checks take place at all.

The counter 130 is optional. If it is identical to the counter 91, concrete representations can be checked not only for "changes", but even the age can be determined. In other words, entering a pattern into the image is a declaration of a watchdog, and the device checks it by expanding or distributing a single watchdog 131 for many sources 80.

By decoding the pattern other data may be extracted as well. For instance, this path is a way to decompose the content of the display and to extract debug and test information 125 (independent of the check) from the image, for example also the original data 84, without requiring a special image recognition (e.g. using OCR). These debug and test data 125 is not relevant for the update check, but is a useful side result.

According to this embodiment an effective, fast and safe operation of displaying of image data, which comprise information being relevant to safety, which may change over the time and/or displaying of which has to be up to date (i.e., if changes of at least one part of the image have occurred, these changes have to be visualized, displayed immediately), can be ensured. A secured image is generated by adding (invisible) information to a source image, i.e. information, which is not displayed and/or which is not visible or is almost invisible when displaying the corresponding image. This information may be seen as security pattern(s). Further, instead of the source image, the secured image is displayed, wherein the currentness of the displayed secured image is checked by use of the added (invisible) information like the security pattern(s). The added (invisible) information like the security pattern(s) is updated from time to time. Thus, if the operation of displaying the secured image is executed correctly, the displayed secured image has to comprise the current added (invisible) information like the current security pattern(s), i.e. the current added (invisible) information or current security pattern(s) last amended.

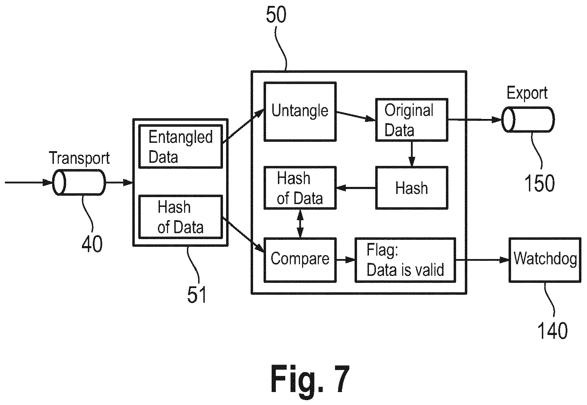

Further, it is checked independently of a watchdog whether the screen freeze detection runs at all. With this, it is checked in the whole chain if the respective processing elements are running and if the transport processes are running. Optionally, other (alternative or additional) mechanisms may be used on the way of the data, which may include watchdogs that can e.g. ensure the execution of an algorithm. For instance, if a watchdog is silenced when the flag "Data is Valid" is set, the chain of data up to this point is checked as well. This may be useful when the data are passed to external services that only wish to obtain unmodified data (i.e. data without entanglement). Fig. 7 shows a corresponding embodiment of a device 50 (as shown in Fig. 4), with an additional watchdog 140 and a transmission medium 150 for exporting the untangled data.

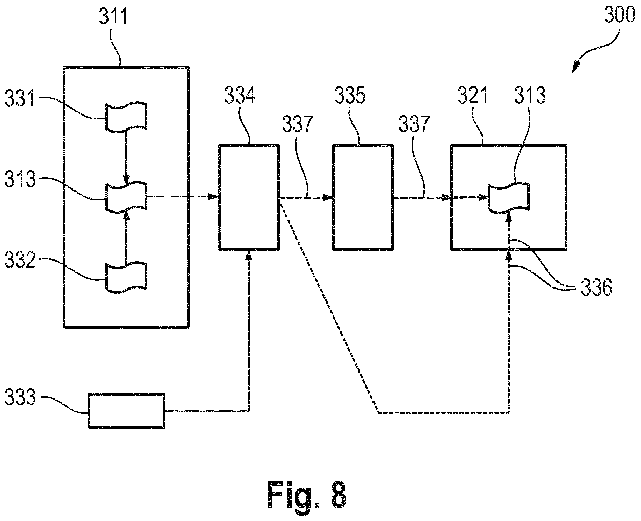

Fig. 8 shows a schematic diagram of a system 300 executing or supporting the monitoring of displaying image data according to an embodiment of the present invention, which may be used as an implementation of the third and fourth devices 80, 120. The system is particularly configured to generate and display a stream of images comprising areas showing alarms or critical vital signs of a patient, wherein the images may change over time. The system 300 comprises a secured image generator 311 and an observer 321, which may be comprised in two separate devices or in one device.

Usually, an image source renders image information and then writes it into a storage like a frame buffer, for example, for displaying the image information. This usual case is shown by components or entities 333 and 334, where the component 333 is a conventional image source and the component 334 is storage like a frame buffer, for example, and where the image source 333 writes image information or data, rendered or generated by the image source 333, into the frame buffer 334.

According to the present embodiment, the secured image generator 311 is a secured image source and is configured to execute a reliable process that renders critical data, which comprise information being relevant to safety, which may change over the time and/or displaying of which has to be up to date (i.e., if changes of at least one part of the image have occurred, these changes have to be visualized, displayed immediately), into a critical source image 332. However, before writing the source image 332 into the frame buffer 334, according to the present embodiment, the secured image generator 311 executes the reliable process by generating or rendering at least one secure pattern 331 that is combined or overlaid with the source image 332 thereby yielding or generating a secured image 313. This secured image 313 is then written into the frame buffer 334.

According to the present embodiment, the frame buffer 334 may store also other images, which are generated by other image sources 333, besides the secured images 313, which are generated by the secured image generator 311. In such a case, such other images may be stored or positioned in the storage or frame buffer 334 such that they do not overlay or otherwise disturb the secured images 313.

According to the present embodiment and also according to further embodiments of the present invention, in order to not disturb the user when the user views the displayed secured image 313, the secure pattern(s) may be kept unperceivable or invisible. To this, known techniques like steganography or watermarking may be used with regard to the secure pattern(s).

If the storage or frame buffer 334 is the final storage or frame buffer before displaying, i.e., if the images displayed by a displaying device is taken from the storage or frame buffer 334, according to the present embodiment, the (displaying operation) observer 321 is configured to take the secured image 313 from the storage or frame buffer 334 for performing the monitoring of displaying the secured image 313 by the displaying device. This case is visualized by arrows 336 in Fig. 8.

However, if at least one further storage or frame buffer 335 is used for storing the secured image 313, i.e., if the images displayed by the displaying device is taken from a further storage or frame buffer 335 as a final storage or frame buffer, according to the present embodiment, the observer 321 is configured to take the secured image 313 from the further storage or frame buffer 335 as the final storage or frame buffer for performing the monitoring of displaying the secured image 313 by the displaying device. This case is visualized by arrows 337 in Fig. 8.

In general, if the displaying device is configured to take a secured image 313 from a storage or frame buffer 334, 335 for displaying the secured image 313, the observer 321 can read out the secured image 313 out of the final frame buffer 334, 335 and can extract the added (invisible) information 331 like the security pattern(s) and, subsequently, update the (invisible) information or security patterns 331 and/or decide, which image parts of the secured image 313 are displayed correctly, i.e., whether the current secured image 313 or the current secured image parts respectively are displayed by the displaying device.

Hence, according to this embodiment the system 300 substantially comprises:
- a secured image generator 311 configured to generate a stream of secured images based on a stream of source images comprising areas showing alarms or critical vital signs of a patient, by generating at least one secured image part in the source images, wherein the secured image part is generated by combining a part of the source image with a security pattern generated by the secured image generator, wherein said security pattern is updated with time;
- a memory storage 334 to store the secured images; and
- an observer storage 321 configured to detect the security pattern from the secured image and to check the currentness of the detected security pattern by comparing the detected security pattern with an expected current security pattern.

Further, an image transmitter (not shown) coupled to the memory storage 334 and a patient monitor (not shown; preferably including the observer storage 321) configured to receive from the image transmitter a secured image from the memory storage and display it may be provided. The observer storage 321 may be configured to tap said secured image during its transmission from the memory storage to the patient monitor.

In certain applications the history of measured values (e.g. sensor data) may be stored to use them later at different time or for different purposes. It is often sufficient to be able to do this since current values are just further ahead in the data and algorithms do not need anything else at all. In other words, no messages are stored, but only an information where the values stand. This is a normal case since, for example, this is always done when data are obtained from different sources, which have to be delayed differently, e.g. with a ring buffer.

It can happen that this memory is accessed in a staggered manner. If there are directly measured values, this is not noticed, at least not immediately. An access to an array with an index is on machine level an addition of an address of the array and the index. Now, if the value "address of the array" is (slightly) broken, the array is still accessed when reading it out. So the values are plausible, but still wrong (if not protected by the present invention).
But the index is identical or at least related to the counter. So if the values in the array are entangled (e.g. interleaved) with the counter, this kind of offset can be recognized, and it can be checked whether the correct data are used. Considering that the memory comprises many arrays, which can be very large, and considering that the measured values are often very similar, it is possible to compute probabilities for problems, which can be improved by the present invention. Hereby, it is important to know that the index is typically calculated, but the address was rather stored by the array, and thus potentially easier to destroy than the index value. But if is wrong, old data may be accessed which would potentially not be noticed.

The entangling provided according to the present invention provides as an additional advantage that a check of the currentness of data is definitely enforced. Should there be reasons not to entangle the input data (or not all input data), e.g. due to transport of the input data using a protocol that does not allow such an entangling, the hash may nevertheless be generated and transported, although fewer options for checking the transported input data are available then.

The present invention may be utilized in several areas, where displaying of image data is done, for example, in the area of medical technology, where data of patients comprising measured values and/or captured image data are displayed for monitoring conditions of the patients and where the data is displayed as images and may change over the time. The present invention is, however, not restricted to a specific area of use.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. Device (30, 30') for enabling detection of currentness of data, the device being configured to:
- obtain input data;
- generate entangled data by entangling the obtained input data with a continuously changing counter;
- generate a hash by applying a hash function on the obtained input data;
- combine the entangled data and the hash into output data; and
- output the output data for transport over a transport medium.

2. Device as claimed in claim 1,
wherein the device is configured to generate the entangled data by entangling the obtained input data with the current time or a periodically changing value as continuously changing counter.

3. Device as claimed in claim 1 or 2,
wherein the device is configured to generate the entangled data by entangling the obtained input data by applying an exclusive OR operation on bits or values of the obtained input data and the continuously changing counter or by scrambling the obtained input data and the continuously changing counter.

4. Device as claimed in any one of the preceding claims,
wherein the device is configured to generate the hash by applying a hash function on the obtained input data and the continuously changing counter.

5. Device as claimed in any one of the preceding claims,
wherein the device is configured to output the hash with a lower data rate than the entangled data.

6. Device (50') for detection of currentness of data, the device being configured to:
- obtain input data transported over a transport medium, the input data including entangled data and a hash;
- derive the entangled data and the hash from the obtained input data;
- generate untangled data by untangling the entangled data using a counter that has been used for entangling the data;
- generate a check hash by applying a hash function on the untangled data;
- compare the generated check hash with the derived hash; and
- determine currentness and validity of the generated untangled data based on the comparison of the generated check hash with the derived hash.

7. Device as claimed in claim 6,
wherein the device is configured to determine that the generated untangled data are current and valid if the generated check hash is identical to the derived hash.

8. System comprising:
- a first device (30, 30') for enabling detection of currentness of data as claimed in any one of claims 1 to 5; and
- a second device (50, 50') for detection of currentness of data as claimed in any one of claims 6 to 7.

9. System as claimed in claim 8, further comprising:
- a third device (80) configured to generate a source image from the data and to generate a secured image based on the source image by generating at least one secured image part, wherein the secured image part is generated by combining a source image part of the source image with a corresponding secure pattern; and
- a fourth device (120) configured to display the secured image, to detect the security pattern from the secured image and to check the currentness of the detected security pattern.

10. System as claimed in claim 8 or 9,
wherein the system is a patient monitoring system and wherein at least the fourth device is included or represents a patient monitor.

11. System as claimed in claim 10,
wherein the first device (30, 30') includes or represents a data processor, the second and third devices (50, 50', 80) include or represent an image generator.

12. System as claimed in any one of claims 9 to 11,
wherein the system is configured to generate and display a stream of images comprising areas showing alarms or critical vital signs of a patient, wherein the images may change over time, and wherein the system (300) comprises:
- a secured image generator (311) configured to generate a stream of secured images based on a stream of source images comprising areas showing alarms or critical vital signs of a patient, by generating at least one secured image part in the source images, wherein the secured image part is generated by combining a part of the source image with a security pattern generated by the secured image generator, wherein said security pattern is updated with time;
- a memory storage (334) to store the secured images; and
- an observer storage (321) configured to detect the security pattern from the secured image and to check the currentness of the detected security pattern by comparing the detected security pattern with an expected current security pattern.

13. Method for enabling detection of currentness of data, the method comprising:
- obtaining input data;
- generating entangled data by entangling the obtained input data with a continuously changing counter;
- generating a hash by applying a hash function on the obtained input data;
- combining the entangled data and the hash into output data; and
- outputting the output data for transport over a transport medium.

14. Method for detection of currentness of data, the method comprising:
- obtaining input data transported over a transport medium, the input data including entangled data and a hash;
- deriving the entangled data and the hash from the obtained input data;
- generating untangled data by untangling the entangled data using a counter that has been used for entangling the data;
- generating a check hash by applying a hash function on the untangled data;
- comparing the generated check hash with the derived hash; and - determining currentness and validity of the generated untangled data based on the comparison of the generated check hash with the derived hash.

15. Computer program comprising program code means for causing a computer to carry out the steps of the method as claimed in claim 13 or 14 when said computer program is carried out on the computer.
